# EUROPEAN PATENT SPECIFICATION

(11) **EP 1 802 895 B1**
(45) Date of publication and mention of the grant of the patent: **25.03.2009**
(21) Application number: 05747973.5
(22) Date of filing: 27.05.2005
(51) Int. Cl.: F16H 25/22

(54) **IMPROVED LOADED BALL SCREW HAVING THREAD PROFILE SHOWING IN A CROSS SECTION A MULTIPLE POINTED GOTHIC ARCH SHAPE**
VERBESSERTE BELASTETE KUGELUMLAUFSPINDEL MIT EINEM GEWINDEPROFIL, DAS IM QUERSCHNITT WIE EIN SPITZBOGEN MIT MEHREREN SPITZEN AUSSIEHT
VIS A BILLES SOUS CHARGE PRESENTANT EN COUPE UN PROFIL DE FILETAGE EN FORME D'ARC GOTHIQUE A POINTS MULTIPLES

(30) Priority: 22.10.2004 ES 200402522
(43) Date of publication of application: 04.07.2007
(73) Proprietor: Shuton, S.A., 01170 Alava (ES)
(72) Inventor: ANDONEGUI AGUIRREGOMEZCORTA, Pedro María, E-01170 Alava (ES)
(74) Representative: Elzaburu Marquez, Alberto
(86) International application number: PCT/EP2005/052426
(87) International publication number: WO 2006/045643

(56) References cited:
- DE-A1- 2 061 101
- DE-A1- 10 003 619
- US-A- 4 896 552
- US-A- 4 939 946
- PATENT ABSTRACTS OF JAPAN vol. 2003, no. 12, 5 December 2003 (2003-12-05) & JP 2004 257466 A (NSK LTD), 16 September 2004 (2004-09-16)
- PATENT ABSTRACTS OF JAPAN vol. 015, no. 178 (M-1110), 8 May 1991 (1991-05-08) & JP 03 041248 A (NIPPON SEIKO KK), 21 February 1991 (1991-02-21)
- PATENT ABSTRACTS OF JAPAN vol. 2003, no. 11, 5 November 2003 (2003-11-05) & JP 2003 194177 A (NSK LTD), 9 July 2003 (2003-07-09)

## Description

The present invention refers to a preloaded ball screw, the thread of which has a profile with a multiple pointed gothic arch shape so that the ball rolls with multiple contact points, producing a guiding of the ball through multiple parallel rolling tracks maintaining the position of the center of the ball, eliminating the degrees of freedom of rotational movements, reducing friction between the balls and increasing rigidity due to less deformation under pressure.

Ball screws are linear to rotational movement transmission mechanisms or vice versa, with great positioning precision and load transport, described and defined in DIN-69051 Standard, parts 1 to 5, in ISO-3408 Standard, parts 1, 2 and 3 and in UNE-15-439-94 Standard, parts 1, 2 and 3.

Ball screws are basically made up of five acting elements:
- The screw, which is a cylindrical shaft, worked on the outer surface of which there is a helical thread with a grooved semicircular profile section with a circular arch or a pointed gothic arch shape.
- The nut, which is a cylindrical hollow sleeve, worked on the inner surface of which is a helical thread with a grooved semicircular profile section with a circular arch or a pointed gothic arch shape, forming a helical tube with a circular profile section with a circular arch or pointed gothic arch shape when the screw and nut are coaxially coupled together.
- The balls, rolling bodies for transmitting stresses by pressure thereon of the screw thread and the nut profile and which are assembled forming ball circuits within the helical tube formed by the screw threads and the nut when coaxially coupled together.
- The deflectors, parts for the recirculation of the balls, assembled on the nut such as to form closed ball circuits.
- The lubricant, oil or grease to reduce friction of the contact areas of the balls with the screw and the nut.

In ball screws, when coaxially assembling the screw and the nut with the balls there is an axial-radial allowance determined by the design specifications for manufacture. In this context allowance means the amount of relative axial or radial movement which may be produced between the screw and the nut with the balls, without there being a relative angular or rotational movement between them. For a correct operation of the precision ball screw assembly, to eliminate this allowance, a construction has been resorted to where the nut assembly is formed by two nuts between which there is an axial separating force called the "preload force", which is transmitted to the screw thread by means of a pressure from an opposite direction on the balls in contact with each nut. To achieve this, the threads of the two nuts are separated or brought closer together with this preload force modifying the multiple pitch ratio existing between the two ball circuits closest to both nuts, statically achieving a contact angle for each ball, the contact angles of the balls located in one nut being of opposite signs with respect to those of the other.

Several systems are known for generating the preload force in nut assemblies formed by double nuts, which consist in introducing a precision washer or spacer between the two nuts in order to space them, separating them or bringing them closer to one another and fixing them against rotation by means of a key. The compact nut system preloaded by means of modifying the pitch in the central area by spacing a common thread in two parts and adjusting the preload force value with the diameter of the balls is also known.

The balls have a capacity for deformation by crushing, due to which the so called contact points of the preloaded balls are crushed surfaces with contact ellipse shapes, and the so called rolling tracks are bands marked by the width of the contact ellipses.

In practice, the helical thread with a grooved profile section a with planar surface shape, such as triangular and trapezoidal shaped helical threads, is not used with balls due to the freedom and instability of the degrees of movement of the ball between two tangent planar surfaces. This is why circular vaults are used, seeking a greater envelopment of the ball, which is why ball screws are constructed with a helical thread with a grooved semicircular profile section with a circular arch or pointed gothic arch shape, the pointed gothic arch shape being the most used and the most advantageous. The profile design is performed with a determined relationship or enveloping conformability coefficient between the ball diameter and the radiuses of the profile arches, and a radial-axial allowance which allows increasing the value of the preload force with the aim of obtaining stability in the contact points of the balls along the tracks on which they roll.

### State of the art

The previously described semicircular thread profiles are designated in DIN-69051 Standard, in ISO-3408-1 Standard and in UNE-15-439-94 Standard, one of them being the circular arch shape and the other the pointed gothic arch shape.

These profiles are known in the embodiments of all ball screw manufacturers, all of them having the following embodiment: the gothic arch is constructed with the same shape in the screw groove and the nut groove. The profile is defined with respect to the ball diameter, the conformability coefficient of the arch radius with respect to the ball diameter, the radial-axial allowance and the contact angle of the ball. Therefore when the ball is preloaded, an enveloping profile with "two ball contact points" is obtained, one contact point with one side of the arch of the nut and another one with the opposing side of the arch of the screw, the ball diameter forming a contact angle joining the two contact points.

Embodiments such as that described are in patents:
*French patent number 1,098,892 dated April 20, 1954, granted to LEÓN HURE & Co.
*US patent number 2,842,978 dated July 15, 1958, granted to HARRY ORNER.
*British patent number 822,582 dated January 17, 1958, number 974,077 dated April 19, 1961, number 1,140,381 dated May 17, 1966, all granted to ROTAX LIMITED.
*French patent number 930,339 dated April 3, 1963, granted to THE CINCINNATI MILLING MACHINE CO.
*European patent number 0 113 014 dated November 21, 1983, granted to MANNESMANN MASCHINENFABRIK GMBH. & Co. KG.

All these patents refer to the same idea of contact of the ball at two points, one located on one side of the pointed gothic arch of the nut and another one on the opposite side of the screw. However, these known systems have a series of drawbacks, such as:
- The balls have a capacity for deformation by crushing, and when transmitting a relative rotational movement to the screw with respect to the nut, the balls located between the grooves of the screw threads and the nut are simultaneously subjected to two tangential and parallel forces, which act in opposite directions in the two ellipses by deforming the two contact points with the ball, generating in the ball rotational, forward, gyroscopic and orbiting movements with respect to its own axis, due to the speed differences in the ball parts by adaptation of the contact point ellipses to the constructive tolerances of the rolling tracks. With these movements there is instability of the center of the ball and the contact points of the ball, pressed between the screw and the nut profiles, due to which the positions of the bands in the paths over which the balls run on the screw groove change, generating vibration due to tension in the ball. The drawbacks are a whistle-like noise and the dynamic instability of the rigidity thereof.
- Each ball moves forward forming pan of a ball reel, therefore according to its position it generally has contact with the balls before and after it, so that if when moving its center is unstable the contact points with those adjoining balls shall also be unstable, therefore generating gear forces modifying the speed of the ball real, generating differences, oscillations and magnifications in the values of the friction torques.
- Preload pressure is exerted in its entirety over two opposite ellipses, so that the rigidity value due to deformation increases less than proportionately with the preload, demanding high preloads in order to obtain greater rigidity, causing an increase in temperature, in the wear of the useful life of the ball screw and differences in the value of the dynamic friction torque for each direction of the forward movement.
- These drawbacks are heightened with manufacturing tolerances of the error for the pitch, taper, allowance and asymmetries in the pointed gothic arch profile with two contact points.
- These drawbacks reduce the features required by the most advanced applications of rotation, acceleration and load speed with precision, rigidity and dynamic friction torque.

Document Patent Abstracts of Japan vol. 2003 and JP 2004257466 provide a preloaded ball screw which comprises, inter alia, profiles with a gothic arch shape providing a contact of two points of the balls with the track.

In the rolling of the preloaded balls with two contact points, the forward movement is defined by the relative shifting of two tangent and parallel planes pressing against the ball with two parallel and opposing direction friction forces, with many degrees of freed of rotation of the ball, which are actuated by contact with the balls that are attached to it.

The ball with two contact points is not guided, for this reason so many types of movements are created, forced by speed differences in their pressure contact areas.

In the known state of the art, a single, not double, nut type is generally used in which the ball is assembled with no axial or radial allowance, with pressure in four points, two in each arch of the profile with a single pointed gothic arch shape of the nut, and two others on each side of the arch of the profile with a single pointed gothic arch shape of the screw. The contact angles form an X, as opposite contact points are joined, so that when an axial force and relative rotation of the screw is carried out with respect to the nut, the ball rotates vertically and horizontally, and there are action forces in one direction and reaction forces in the opposite direction due to the X shape, the result being indefinite movements when the rotation speed is high, generating as a result temperatures and wear making their use inappropriate.

There are two patents in the state of the art which attempt to guide the ball with more than two contact points:
*US patent number 813,741, dated May 16, 1955, granted to REGINAL BISHOP.
*French patent number 2395423, dated June 16, 1978, granted to LOUIS POHL.

These patents refer to the same idea of fitting the ball in contact with planar walls with triangular or trapezoid shaped threads. In practice, the helical thread with a grooved section of a profile with planar surface shape, such as triangular and trapezoidal shaped helical threads, is not used with balls due to the freedom and instability of the degrees of movement of the ball between two tangent planar surfaces. Therefore, they are not contemplated in DIN- 69051, ISO-3408 and UNE 15-43994 ball screw Standards.

In order to solve the indicated drawbacks, the most appropriate solution is to guide the forward movement of the ball by keeping the position of its center of gravity stable and matching the speed of the contact areas, distributing the preload on a pointed gothic contact surface, causing less deformation of the ball.

### Description of the Invention

The ball can be guided with "multiple contact points" since, on the side of an arch the ball will make contact at multiple points, and on the opposite side of the other arch, the contact of the ball will be at other multiple points. In order for the ball to have given contact points there must be tangent curves on that side of the arch, this arch will be formed by mean of superimposed pointed gothic arches, i.e. the multiple pointed gothic arch with two construction centers for each arch. On the opposite side is the multiple pointed gothic arch corresponding to its contact points.

By geometry, multiple points of space equidistant from a center contain a sphere, and multiple points of the plane contain a circle. With the multiple contact points the ball will roll in a guided manner, generating multiple parallel forward movement rolling circumferences and their corresponding rolling tracks, eliminating gyroscopic and other random movements. The position of the center of the ball will be kept stable in the rolling.

The symmetry of the contact points is defined by design and since the circle of the ball is the geometric site of all the points from which the segment joining the two points has equal angles, the pressure angle of the opposite point will be maintained constant. Since the contact points are elliptical in shape, the load of every two elliptical areas is distributed on one side, and in another ellipse of a greater projection in the other, achieving less deformation of the ball with an equal preload. The symmetry of the design of the contact points can be voluntarily modified by mean of the preload force, modifying the deformation of the ellipse due to the load on the appropriate contact point.

Therefore, the present invention describes a preloaded ball screw made up of a screw, rolling balls and a preloaded double nut with recirculation, being worked on the inner surface of said nut a helical thread with a grooved section profile with a multiple pointed gothic arch shape so that the balls roll with multiple contact points thereby producing a guiding of the ball through multiple parallel rolling tracks and maintaining the position of the centre of the ball with two construction centres for each arch, the nut being assembled on said screw on the outer surface of which is worked a helical thread with a grooved section profile in the shape of a multiple pointed gothic arch with two construction centres for each arch, said rolling balls transmitting the force at an angle, pressed and in tangential contact with multiple points of the nut thread profile and with other multiple points of the screw profile, whereby the contact points of the nut thread profile and the contact points of the screw profile are opposite one another and form a contact angle.

The above mentioned preloaded ball screw eliminates the degrees of freedom of rotation movements, decreases friction between balls and increases the rigidity due to less deformation under pressure.

The preloaded double nut of the ball screw with recirculation is a cylindrical hollow sleeve, worked on the inner surface of which there is a helical thread with a grooved section and is assembled on a screw which is a cylindrical shaft. The balls are spherical rolling bodies which are assembled forming ball circuits within a helical tube with a profile with a multiple contact point multiple pointed gothic arch shape, formed by the threads of the screw and of the nut when coaxially coupled together.

### Brief Description of the Drawings

The attached drawings show:

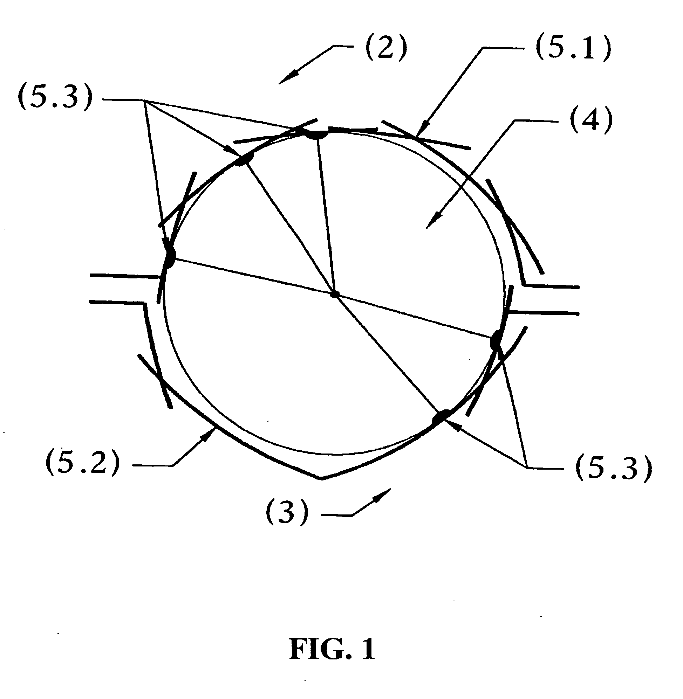

Figure 1 shows a graph illustrating the design of the profile of the thread of the ball screw, having a multiple pointed gothic arch shape so that the ball rolls with multiple contact points, formed by the profile section of the thread of the nut, with a multiple pointed gothic arch shape with two construction centers for each arch, and the other profile section of the thread of the screw, with a multiple pointed gothic arch shape with two construction centers for each arch, coaxially coupled;

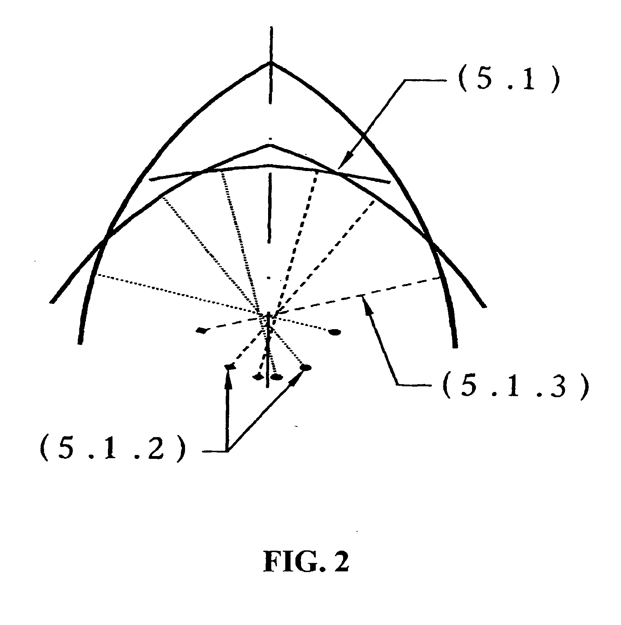

Figure 2 shows a graph illustrating the design for the construction of the multiple pointed gothic arch shape with two construction centers for each arch as a superposition of pointed gothic arches with different pairs of centers and the radiuses of which have certain relationship or enveloping conformability coefficient with the diameter of the ball;

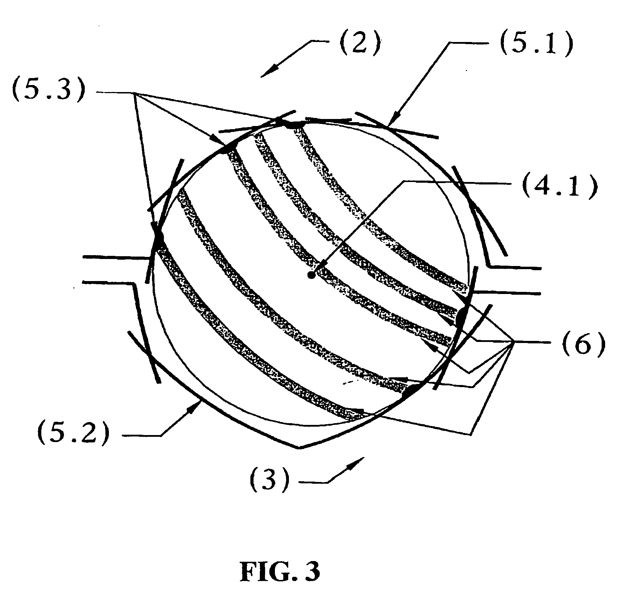

Figure 3 shows a view of the multiple ellipses of the contact points and of the bands of the tracks on one side of the multiple pointed gothic arch of the nut and of the points and bands on the side of the opposite pointed gothic arch of the screw, forming a contact angle, generated on the ball as multiple parallel forward movement rolling circumferences, maintaining the position of the center of the ball stable;

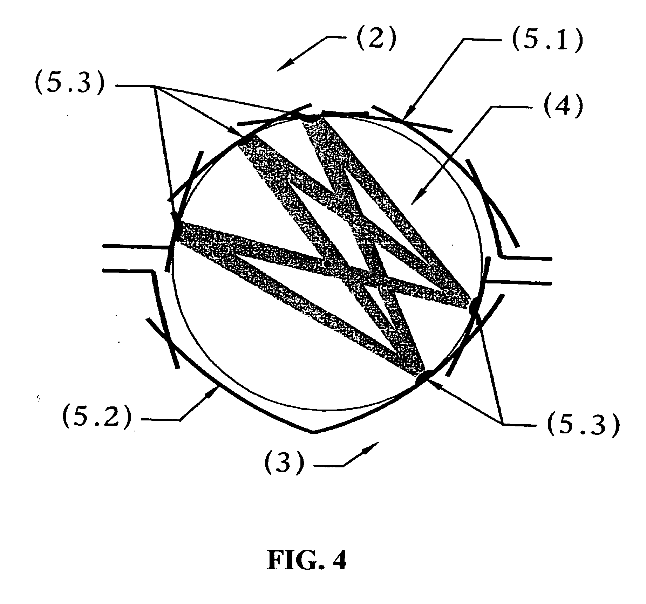

Figure 4 shows a frontal view of the multiple contact points and of the division of the preload forces on the points of the multiple pointed gothic arch; and

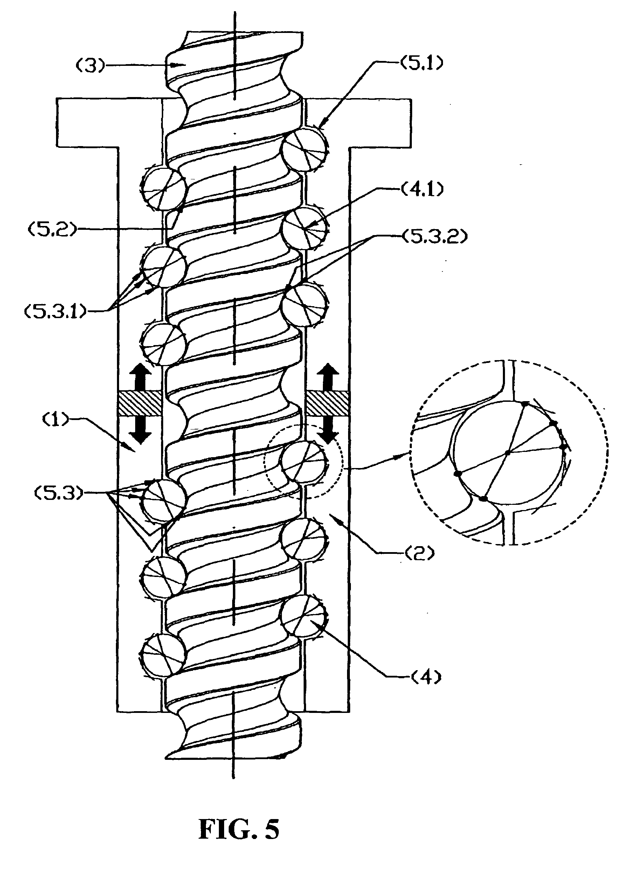

Figure 5 shows an elevational view of the preloaded ball screw, the tread of which has a profile with a multiple pointed gothic arch shape so that the ball rolls with multiple contact points, forming a contact angle, object of the invention.

### Preferred Embodiment of the Invention

The invention will be described below in more detail with the aid of an embodiment example, making reference to the figures in the drawings.

In reference to Figure 1, this shows a sectional view of the design of the new thread profile having a multiple pointed gothic arch shape with two construction centers for each arch once the contact angles of the multiple points (5.3) of the ball (4) are defined with the multiple pointed gothic arch (5.1) of the nut (2) and with the multiple pointed gothic arch (5.2) of the screw (3), the conformability coefficient of the radiuses of the arches with the diameter of the ball and the radial-axial allowance between the nut (2) and the screw (3), coaxially coupled together.

Figure 2 shows a graph illustrating the design for the construction of a multiple pointed gothic arch (5.1) with two construction centers for each arch as a superposition of pointed gothic arches with different pairs of centers (5.1.2), and the radiuses of which (5.1.3) have a certain relationship or enveloping conformability coefficient with the diameter of the ball.

Figure 3 shows a view of the multiple ellipses of the contact points (5.3) and of the bands of the tracks (6), some of which are located on one side of the multiple pointed gothic arch (5.1) of the nut (2), and others located on the opposite side of the multiple pointed gothic arch (5.2) of the screw (3), forming a contact angle, these tracks are generated on the ball (4) as multiple parallel forward movement rolling circumferences (6), maintaining the position of the center (4.1) of the ball stable, the ball (4) therefore being guided and the degrees of freedom being eliminated.

Figure 4 shows a frontal view of the multiple contact points (5.3) and of the division of the preload forces on the points of the multiple pointed gothic arch (5.1) of the nut (2), with a projection of the loads towards the opposite points, forming a smoother contacting ellipse on the opposite side of the other multiple pointed gothic arch (5.2) of the screw (3).

Finally, Figure 5 shows a plan view of a ball screw (1) according to the invention, which is formed by a preloaded double nut (2) with recirculation which is a cylindrical hollow sleeve, worked on the inner surface of which there is a helical thread with a grooved section profile with a multiple pointed gothic arch shape (5.1) with two construction centers for each arch, which is assembled on a screw (3) which is a cylindrical shaft, worked on the outer surface of which there is a helical thread with a grooved section profile with a multiple pointed gothic arch shape (5.2) with two construction centers for each arch, and the balls (4), which are spherical rolling bodies for transmitting forces at an angle by the pressure thereon, by tangential contact with multiple points (5.3.1) of the profile of the thread of the nut and with other opposite multiple points (5.3.2) of the profile of the screw forming a contact angle, and which are assembled forming ball circuits inside the helical tube with a profile with a multiple pointed gothic arch shape of multiple contact points (5.3) forming the threads of the screw and of the nut when they are coaxially coupled together.

In short, with the ball screw according to this invention, with the profile of the multiple pointed gothic arch shaped thread so that the ball rolls with multiple contact points, which causes a guiding of the ball through different parallel rolling tracks maintaining the position of the center of the ball, eliminating the degrees of freedom of rotational movements, the following advantages are obtained:
- Rigidity is increased due to less deformation under pressure, obtaining higher rigidity with low preloads, whereby reducing the temperature and the useful life of the ball screw is increased and the differences of the value of the dynamic friction torque for each direction of the forward movements are eliminated.
- The meshing forces due to friction between the balls are eliminated, modifying the speed of the ball reels, creating differences, oscillations and increases of the values of the friction torques.
- The vibration due to stress in the ball and the defects of the whistling noise and the dynamic instability of the rigidity are eliminated.
- The manufacturing tolerances are more acceptable.
- The features required by the most advanced applications of rotation, acceleration and load speed are obtained with precision, rigidity and dynamic friction torque.

These advantages are obtained with a small modification of the constructive design of the profile of the nut and screw, which implies no increase in the economic manufacturing cost.

This new helical thread profile with a grooved profile section with a multiple pointed gothic arch shape of multiple contact points can be manufactured with different combinations of contact points on the nut and on the screw, for example with 4 points on the nut and 4 points on the screw, or 4 and 3, or 4 and 2, or 4 and 1, and 3 and 3, or 3 and 2, or 3 and 1, or 2 and 2, or 2 and 1, as well as with other contact point combinations as long as such combination is not 1 and 1.

## Claims

1. A preloaded ball screw (1), made up of a screw (3), rolling balls (4) and a preloaded double nut (2) with recirculation, on the inner surface of said nut is worked a helical thread with a grooved section profile with a multiple pointed gothic arch shape (5.1) so that the balls roll with multiple contact points (5.3), thereby producing a guiding of the ball through multiple parallel rolling tracks (6), and maintaining the position of the center of the ball (4.1) with two construction centers for each arch, said nut (2) is assembled on said screw (3) on the outer surface of which is worked a helical thread with a grooved section profile in the shape of a multiple pointed gothic arch (5.2) with two construction centers for each arch, said rolling balls (4) transmitting the force at an angle, pressed and in tangential contact with multiple points (5.3.1) of the nut thread profile and with other multiple points (5.3.2) of the screw profile whereby the contact points (5.3.1) of the nut thread profile and the contact points (5.3.2) of the screw profile being opposite on another and forming a contact angle.

## Patentansprüche

1. Vorbelastete Kugelumlaufspindel (1), bestehend aus einer Spindel (3), Rollkugeln (4) und einer vorbelasteten Doppelmutter (2) mit Rückführung, wobei in der Innenfläche der Mutter ein Schraubengewinde ausgebildet ist, das ein genutetes Schnittprofil mit einer derartigen Mehrspitzen-Spitzbogenform (5.1) aufweist, dass die Kugeln mit mehreren Kontaktpunkten (5.3) rollen, wodurch eine Rührung der Kugel durch mehrere parallele Rollbahnen (6) bewirkt wird und die Position der Mitte der Kugel (4.1) mit Hilfe zweier Konstruktionsmitten für jeden Bogen beibehalten wird, wobei die Mutter (2) an der Spindel (3) angeordnet ist, an deren Außenfläche ein Schraubengewinde ausgebildet ist, das ein genutetes Schnittprofil in Form eines Mehrspitzen-Spitzbogens (5.2) mit zwei Konstruktionsmitten für jeden Bogen aufweist, wobei die Rollkugeln (4) die Kraft unter einem Winkel übertragen, wobei sie gedrückt werden und in Tangentialkontakt mit mehreren Punkten (5.3.1) des Mutter-Gewindeprofils und mit mehreren weiteren Punkten (5.3.2) des Gewindeprofils stehen, wodurch die Kontaktpunkte (5.3.1) des Mutter-Gewindeprofils und die Kontaktpunkte (5.3.2) des Schneckenprofils einander gegenüberliegen und einen Kontaktwinkel bilden.

## Revendications

1. Vis à billes (1) préchargée, constituée d'une vis (3), de billes (4) de roulement et d'un écrou double préchargé (2) avec recirculation, la surface intérieure dudit écrou étant usinée d'un filet hélicoïdal ayant un profil de section à gorge en forme d'arc gothique à pointes multiples (5.1) afin que les billes roulent avec de multiples points de contact (5.3), produisant ainsi un guidage de la bille suivant des chemins de roulement parallèles multiples (6), et maintenant la position du centre de la bille (4.1) avec deux centres de construction pour chaque arc, ledit écrou (2) étant assemblé sur ladite vis (3) sur la surface extérieure de laquelle est usiné un filet hélicoïdal ayant un profil de section à gorge sous la forme d'un arc gothique (5.2) à pointes multiples avec deux centres de construction pour chaque arc, lesdites billes de roulement (4) transmettant la force sous un angle, sous pression et en contact tangentiel avec des points multiples (5.3.1) du profil de filet de l'écrou et avec d'autres points multiples (5.3.2) du profil de la vis, grâce à quoi les points de contact (5.3.1) du profil de filet de l'écrou et les points de contact (5.3.2) du profil de la vis sont opposés entre eux et formant un angle de contact.
